# EUROPÄISCHE PATENTANMELDUNG

(11) **EP 3 940 211 A1**
(43) Veröffentlichungstag der Anmeldung: **19.01.2022**
(21) Anmeldenummer: 21184199.4
(22) Anmeldetag: 07.07.2021
(51) Int. Cl.: F01P 3/08, F01M 1/08, F01M 5/00

(54) **DIAGNOSEVERFAHREN FÜR EIN KOLBENKÜHLDÜSENVENTIL, DIAGNOSEVORRICHTUNG, STEUERGERÄT, KRAFTFAHRZEUG**

(30) Priorität: 16.07.2020 DE 102020208867
(71) Anmelder: VOLKSWAGEN AG, 38440 Wolfsburg (DE)
(72) Erfinder: Gens, Julian, 38442 Wolfsburg (DE); Ledwig, Christian, 38116 Braunschweig (DE)

(57) **Zusammenfassung**

Die vorliegende Erfindung betrifft allgemein ein Diagnoseverfahren für ein Kolbenkühldüsenventil (KKD-Ventil) eines Öldrucksystems einer Verbrennungskraftmaschine eines Kraftfahrzeugs, umfassend: Ansteuern (21; 58) des KKD-Ventils (10; 43) zum Erfassen von Öldruckdiagnosedaten, wenn mehrere Freigabebedingungen erfüllt sind, wobei die mehreren Freigabebedingungen enthalten: Vorliegen eines stationären Betriebs der Verbrennungskraftmaschine; Vorliegen eines vorbestimmten Betriebsbereichs; Vorliegen einer Öltemperatur in einem vorbestimmten Öltemperaturbereich; Ausschluss einer geplanten Ansteuerung des KKD-Ventils zur regulären Kolbenkühlung; und Ausschluss eines Fehlers des Öldrucksystems; das Diagnoseverfahren weiter umfassend: Bestimmen (22), ob sich ein Öldruckmesspunkt innerhalb eines vorgegebenen Öldruckmesspunktebereichs befindet. Die Erfindung betrifft weiterhin eine Diagnosevorrichtung, ein Steuergerät, und ein Kraftfahrzeug jeweils geeignet bzw. eingerichtet zur Durchführung des erfindungsgemäßen Verfahrens.

## Beschreibung

Die Erfindung betrifft ein Diagnoseverfahren für ein Kolbenkühldüsenventil, eine Diagnosevorrichtung, ein Steuergerät, und ein Kraftfahrzeug.

Es gibt verschiedene Arten von Öldrucksystemen für Verbrennungskraftmaschinen, zum Beispiel solche mit einer Konstantpumpe, mit einer in Stufen verstellbaren Pumpe, und solche mit einer vollvariablen Pumpe.

Wird eine Konstantpumpe oder eine stufenweise verstellbare Pumpe verwendet, können ein oder mehrere Öldruckschalter vorgesehen sein. Alternativ kann auch ein Öldrucksensor verwendet werden. Bei einer vollvariablen Ölpumpe wird typischerweise ein Öldrucksensor verwendet, der kontinuierlich den Öldruck in dem Öldrucksystem erfasst.

Wird eine schaltbare Kolbenkühlung verwendet, kann das Öldrucksystem zusätzlich ein oder mehrere Kolbenkühldüsenventile (KKD-Ventile) aufweisen. Dabei kann entweder zentral ein KKD-Ventil für mehrere Kolben vorgesehen sein oder es kann für jeden Kolben ein separates KKD-Ventil vorgesehen sein.

Beispielsweise können bei einer Vier-Zylinder-Hubkolben-Verbrennungskraftmaschine vier KKD-Ventile vorgesehen sein. Andererseits sind Verbrennungskraftmaschinen bekannt, bei denen zwei KKD-Ventile für sechs oder acht Kolben vorgesehen sind.

KKD-Ventil(e) ist (sind) typischerweise in einer Nebengalerie (auch Kolbenkühldüsengalerie genannt) eines Öldrucksystems einer Verbrennungskraftmaschine angeordnet. So wird eine Kühlung und/oder eine Schmierung verschiedener Bauteile realisiert, wie zum Beispiel eines Pleuellagers, eines Turboladers, eines Hauptlagers, einer (oder mehrere) Nockenwelle(n), eines Nockenwellenphasenstellers, und dergleichen. Auch eine Schmierung/Kühlung von Bauteilgruppen (zum Beispiel von Kolben und/oder Zylinderwänden).

Um Bauteile des Kolbens und die Zylinderwandung zu kühlen und zu schmieren, kann das KKD-Ventil derart angesteuert werden, dass Öl von der Nebengalerie über Kolbenkühldüsen in die Hauptgalerie (d.h. gegen die Kolben) gespritzt wird.

Um die Funktionalität des KKD-Ventils zu erfassen, ist bekannt, dass ein Öldruckschalter oder - sensor in der Nebengalerie eingesetzt wird.

Aus der Patentanmeldung GB 2478545 A ist ein Verfahren bekannt, um ein Versagen eines KKD-Ventils (engl.: Oil Piston Cooling Jet Valve, kurz: OPCJ-Valve) zu diagnostizieren. Hier können jedoch keine Freigabebedingungen an das Verfahren gestellt werden, die sicher stellen, dass tatsächlich keine planmäßige Kolbenkühlung stattfindet. Es werden auch nur einige, wenige Größen verwendet, um das Verfahren freizugeben. Es besteht das Risiko, dass fälschlicherweise ein Fehler (falsch-negativ; engl.: false failure) diagnostiziert wird oder dass fälschlicherweise ein gutes Ergebnis (falsch-positiv; engl.: false pass) diagnostiziert wird. Darüber hinaus ist dort lediglich eine passive Diagnose vorgesehen, die möglicherweise ungenaue Ergebnisse liefert.

Aufgabe der vorliegenden Erfindung ist es, ein Diagnoseverfahren für ein KKD-Ventil, eine Diagnosevorrichtung, ein Steuergerät, sowie ein Kraftfahrzeug bereitzustellen, die die oben genannten Nachteile wenigstens teilweise überwinden.

Diese Aufgabe wird durch das erfindungsgemäße Diagnoseverfahren für ein KKD-Ventil nach Anspruch 1, durch die erfindungsgemäße Diagnosevorrichtung nach Anspruch 6, durch das erfindungsgemäße Steuergerät nach Anspruch 9, und durch das erfindungsgemäße Kraftfahrzeug nach Anspruch 10 gelöst.

Nach einem ersten Aspekt umfasst ein erfindungsgemäßes Diagnoseverfahren für ein Kolbenkühldüsenventil (KKD-Ventil) eines Öldrucksystems einer Verbrennungskraftmaschine eines Kraftfahrzeugs: Ansteuern des KKD-Ventils zum Erfassen von Öldruckdiagnosedaten, wenn mehrere Freigabebedingungen erfüllt sind, wobei die mehreren Freigabebedingungen enthalten:
- Vorliegen eines stationären Betriebs der Verbrennungskraftmaschine;
- Vorliegen eines vorbestimmten Betriebsbereichs;
- Vorliegen einer Öltemperatur in einem vorbestimmten Öltemperaturbereich;
- Ausschluss einer geplanten Ansteuerung des KKD-Ventils zur regulären Kolbenkühlung; und
- Ausschluss eines Fehlers des Öldrucksystems

und das Diagnoseverfahren weiter umfasst: Bestimmen, ob sich ein Öldruckmesspunkt innerhalb eines vorgegebenen Öldruckmesspunktebereichs befindet.

Nach einem zweiten Aspekt der vorliegenden Erfindung ist eine Diagnosevorrichtung für ein Kolbenkühldüsenventil (KKD-Ventil) einer Verbrennungskraftmaschine eines Kraftfahrzeugs dazu eingerichtet, ein Diagnoseverfahren nach dem ersten Aspekt auszuführen.

Nach einem dritten Aspekt der vorliegenden Erfindung umfasst ein Steuergerät für ein Kraftfahrzeug eine Diagnosevorrichtung nach dem zweiten Aspekt.

Nach einem vierten Aspekt der vorliegenden Erfindung weist ein Kraftfahrzeug eine Diagnosevorrichtung nach dem zweiten Aspekt und/oder ein Steuergerät nach dem dritten Aspekt auf.

Weitere vorteilhafte Ausgestaltungen der Erfindung ergeben sich aus den Unteransprüchen und der folgenden Beschreibung bevorzugter Ausführungsbeispiele der vorliegenden Erfindung.

Wie bereits beschrieben, sind KKD-Ventile allgemein bekannt. Zur Diagnose, ob ein KKD-Ventil ordnungsgemäß funktioniert, kann ein Öldruckschalter, insbesondere für die Nebengalerie, vorgesehen sein. So ein Öldruckschalter kann aber zusätzliche Kosten verursachen und es ist zudem generell wünschenswert, Bauteile einzusparen, um so auch die die Fehleranfälligkeit zu senken.

Eine weitere Möglichkeit zur Diagnose besteht darin, einen erwarteten Öldruckwert zu erfassen, der zu einem vorbestimmten Zeitpunkt erreicht wird, nachdem ein konstanter Öldruck in der Hauptgalerie für einen gewissen Zeitraum herrscht.

Hier wurde jedoch erkannt, dass die Bedingung, einen konstanten Druck in der Hauptgalerie zu haben, möglicherweise nicht ausreichend ist, da so ein Messfehler entstehen könnte, wenn solch ein Verfahren ausgeführt wird, und währenddessen eine Kühlung (betriebsbedingt) stattfinden muss.

Außerdem wurde erkannt, dass ein erwarteter Wert des Öldrucks von einem Betriebszustand der Verbrennungskraftmaschine abhängen kann.

Darüber hinaus wurde auch erkannt, dass es fehleranfällig sein kann, wenn man einen genauen Zeitpunkt definiert, wann ein erwarteter Öldruck erreicht wird, statt eines Zeitfensters.

Eine weitere Möglichkeit für eine Diagnose des KKD-Ventils ist das Vorsehen eines Öldrucksensors in der Nebengalerie. Dies ist jedoch auch mit erhöhten Bauteil- und Montagekosten verbunden.

Deshalb betreffen manche Ausführungsbeispiele ein Diagnoseverfahren für ein Kolbenkühldüsenventil (KKD-Ventil) eines Öldrucksystems einer Verbrennungskraftmaschine eines Kraftfahrzeugs, umfassend: Ansteuern des KKD-Ventils zum Erfassen von Öldruckdiagnosedaten, wenn mehrere Freigabebedingungen erfüllt sind, wobei die mehreren Freigabebedingungen enthalten:
- Vorliegen eines stationären Betriebs der Verbrennungskraftmaschine;
- Vorliegen eines vorbestimmten Betriebsbereich;
- Vorliegen einer Öltemperatur in einem vorbestimmten Öltemperaturbereich;
- Ausschluss einer geplanten Ansteuerung des KKD-Ventils zur regulären Kolbenkühlung; und
- Ausschluss eines Fehlers des Öldrucksystems
das Diagnoseverfahren weiter umfassend: Bestimmen, ob sich ein Öldruckmesspunkt innerhalb eines vorgegebenen Öldruckmesspunktebereichs befindet.

Bekannte KKD-Ventile sind typischerweise in einer Nebengalerie eines Ölkreislaufs einer Verbrennungskraftmaschine vorgesehen und können als elektrisches oder mechanisches Schaltventil ausgebildet sein.

Durch Öffnen des KKD-Ventils können Düsen mit Öl durchströmt werden, welche in der Nebengalerie vorgesehen sind. Dabei wird Öl auf einen Kolbenboden eines Kolbens der Verbrennungskraftmaschine Öl aufgebracht, um den Kolben (bspw. auch mit seinen Anbauteilen, wie z.B. Kolbenringe und Kolbenbolzen) bzw. eine Zylinderlaufbahn zu kühlen und/oder zu schmieren.

Das KKD-Ventil gemäß der vorliegenden Erfindung kann angesteuert werden, d.h. geöffnet oder geschlossen werden, um Öl an den Kolben zu bringen, auch wenn keine Kühlung des Kolbens erforderlich oder planmäßig vorgesehen ist. So kann das Diagnoseverfahren initiiert werden und diagnostiziert werden, ob das KKD-Ventil ordnungsgemäß funktioniert.

Nach dem außerplanmäßigen Ansteuern des KKD-Ventils wird hier überprüft, ob sich ein Öldruckmesspunkt innerhalb eines vorgegebenen Öldruckmesspunktebereichs befindet.

Dazu werden Öldruckdiagnosedaten erfasst. Diese werden von einem Öldrucksensor bereitgestellt, der sich in der Hauptgalerie bzw. einem Hauptölkreislauf eines Öldrucksystems befindet.

Somit kann ein zusätzlicher Öldruckschalter oder -sensor für die Nebengalerie eingespart werden.

Es gibt Ausführungsbeispiele, bei denen für das Ansteuern des KKD-Ventils mehrere Freigabebedingungen erfüllt sein müssen. So kann eine fehlerminimierte Diagnose stattfinden.

Eine Freigabebedingung ist das Vorliegen eines stationären Betriebs der Verbrennungskraftmaschine.

Dadurch kann ein belastbareres Diagnoseergebnis erzielt werden. Verläuft der Öldruck dynamisch (also nicht stationär), bspw. durch ein Verstellen einer Nockenwelle), würden Schwankungen bzw. Störungen des Öldrucksignals ein Diagnosekriterium verfälschen.

Um festzustellen, ob sich die Verbrennungskraftmaschine in einem stationären Betrieb befindet, können mehrere Größen in Betracht gezogen werden.

Beispielhaft seien hier eine Motordrehzahl, ein Motormoment, ein Winkel einer Einlass-Nockenwelle und ein Winkel einer Auslass-Nockenwelle genannt, ohne die vorliegende Erfindung darauf zu beschränken.

Dabei kann auch eine (beliebige) Untermenge der genannten Größen, bspw. nur die Motordrehzahl oder die Motordrehzahl zusammen mit dem Winkel der Einlass-Nockenwelle in Betracht gezogen werden.

Jede in Betracht gezogene Größe kann dann als stationär identifiziert werden, wenn sie sich innerhalb eines für sie vorgegebenen Bereichs nicht ändert. Beispielsweise kann für die Motordrehzahl definiert werden, dass sie dann als stationär gilt, wenn eine Abweichung von weniger als fünfzig Umdrehungen pro Minute (womit ein Bereich von hundert Umdrehungen pro Minute aufgespannt wird) vorliegt.

Genauso kann für einen Winkelbereich einer Nockenwelle definiert sein, dass er dann als stationär gilt, wenn er sich um weniger als zwei Grad ändert.

In anderen Worten: Ein stationärer Betrieb kann dann vorliegen, wenn ein Gradient der in Betracht gezogenen Größe(n) unterhalb eines vorgegebenen Schwellwerts liegt.

Es gibt Ausführungsbeispiele, bei denen zur genauen Identifizierung des stationären Betriebs die aktuellen Werte der genannten Größen mit Tiefpass-gefilterten historischen Werten abgeglichen werden (wobei die vorliegende Erfindung nicht auf die Verwendung eines Tiefpass-Filters beschränkt ist). Für jede Größe kann dabei ein Zeitpunkt, bis zu dem die historischen Daten ermittelt werden, separat vorbestimmt sein. Daraufhin kann eine Differenz zwischen den aktuellen Daten und den Tiefpass-gefilterten Daten ermittelt werden, wobei die ermittelte Differenz unterhalb eines vorgegebenen Grenzwerts liegen muss, damit der Betrieb als stationär gelten kann.

In manchen Ausführungsbeispielen kann anschließend eine zeitliche Entprellung für jede Größe mit einer eigenen Zeitkonstante erfolgen. Das heißt, dass jede Größe darüber hinaus für einen vorbestimmten Zeitraum stationär sein muss, damit die Freigabe erfolgt.

Wenn solche dynamischen Auswertungen für die geforderten Zeiten unterhalb der geforderten Schwellwerte der Differenzen liegen, kann der Betrieb als stationär gelten.

Eine weitere Freigabebedingung ist ein Vorliegen eines vorbestimmten Betriebsbereichs.

Dafür können die vorgenannten und weitere Größen in Betracht gezogen werden.

Beispielsweise kann zusätzlich oder alternativ die Öltemperatur berücksichtigt werden.

Der Betriebsbereich kann derart vorbestimmt sein, dass sich beispielsweise die Motordrehzahl innerhalb eines vorgegebenen Intervalls befinden muss (bspw. zwischen achthundert und eintausend Umdrehungen pro Minute). Des Weiteren kann vorbestimmt sein, dass sich die Öltemperatur zwischen neunzig und fünfundneunzig Grad Celsius befinden muss, damit diese Freigabebedingung erfüllt ist, ohne die vorliegende Erfindung darauf zu beschränken.

In manchen Ausführungsbeispielen ist der vorbestimmte Betriebsbereich für die Motordrehzahl in Abhängigkeit von der Öltemperatur und/oder dem Motormoment definiert. Beispielsweise kann ein Kennfeld vorgesehen sein, welches eine Abhängigkeit der Motordrehzahl und/oder des Motormoments sichtbar macht.

Beispielsweise kann für eintausend Umdrehungen pro Minute der vorbestimmte Betriebsbereich erreicht sein, wenn eine Öltemperatur zwischen einundneunzig und dreiundneunzig Grad Celsius und/oder ein Motormoment zwischen fünfzig und siebzig Newtonmetern vorliegt, ohne die vorliegende Erfindung darauf zu beschränken.

Für die in Betracht gezogenen Größen können auch einzelne Kennfelder definiert sein - beispielsweise ein Kennfeld, um die Abhängigkeit der Drehzahl von der Öltemperatur zu definieren, und/oder ein Kennfeld, um die Abhängigkeit der Drehzahl von dem Motormoment zu definieren.

Es gibt Ausführungsbeispiele, bei denen eine weitere Freigabebedingung ein Vorliegen der Öltemperatur in einem vorbestimmten Öltemperaturbereich ist.

Typischerweise hat die Öltemperatur Einfluss auf die Viskosität des Motoröls, welche wiederum einen Einfluss auf die aufgenommenen Öldruckmesspunkte hat.

Des Weiteren ist es typischerweise erforderlich, dass eine Kolbenkühlung stattfindet, wenn die Öltemperatur einen Grenzwert überschreitet. Eine planmäßige Kolbenkühlung soll jedoch ausgeschlossen sein.

Ist eine Kolbenkühlstrategie von einer Öltemperatur abhängig, so kann ein dafür vorgesehener Öltemperaturbereich von vorne herein ausgeschlossen werden. Außerdem können zu hohe oder zu niedrige Öltemperaturen ausgeschlossen werden, da solche in manchen Ausführungsbeispielen für eine empirische Ermittlung von Fehlerschwellen nicht betrachtet werden sollen.

Der Öltemperaturbereich kann aber auch von der vorliegenden Motordrehzahl oder von anderen Größen abhängen.

Eine weitere Freigabebedingung ist ein Ausschluss einer geplanten Ansteuerung des KKD-Ventils zur regulären Kolbenkühlung.

In der Regel wird das KKD-Ventil geöffnet, um den Kolben (sowie seine Anbauteile sowie die Zylinderwandung(en)) zu kühlen bzw. zu schmieren. Solch eine Ansteuerung kann dann erfolgen, wenn ein vorbestimmter Betriebsbereich vorliegt (der prinzipiell anders definiert sein kann als der Betriebsbereich, der vorliegen muss, um das erfindungsgemäße Diagnoseverfahren auszuführen).

Um das erfindungsgemäße Diagnoseverfahren auszuführen, soll in manchen Ausführungsbeispielen diese (planmäßige) Öffnung des KKD-Ventils ausgeschlossen sein. Somit kann sichergestellt werden, dass das Diagnoseverfahren nur dann ausgeführt wird, wenn keine Anforderung besteht, dass der Kolben gekühlt und/oder geschmiert werden muss.

Wenn beispielsweise eine getaktete Kolbenkühlung vorgesehen ist (welche je nach Betriebsbereich vorgesehen sein kann), bei der das KKD-Ventil intermittierend geöffnet und geschlossen wird, kann das Diagnoseverfahren für eine Dauer dieses intermittierenden Betriebs (insbesondere auch in den Ausschaltphasen des intermittierenden Betriebs) gesperrt werden.

So kann die geplante Kolbenkühlung erfolgen, ohne dass sie durch eine Diagnose beeinträchtigt wird. Weiter kann so ein Abbruch des Diagnoseverfahrens durch einen (wieder) einsetzenden intermittierenden Betrieb vermieden werden.

Eine weitere Freigabebedingung ist, in manchen Ausführungsbeispielen, ein Ausschluss wenigstens eines oder verschiedener mehrerer Fehlerzustände im Öldrucksystem. Wenn beispielweise ein Öldrucksensor, ein Ölpumpenregelventil, ein (anderes oder das gleiche) Kolbenkühldüsenventil, ein Öltemperatursensor oder ein oder mehrere andere Sensoren oder Aktoren im Öldrucksystem als defekt erkannt werden, kann das Diagnoseverfahren gesperrt werden.

Auch ein oder mehrere Fehler, die als Ersatzreaktion einen maximal möglichen Öldruck hervorrufen und/oder eine Öldruckregelung abschalten, können das Diagnoseverfahren sperren.

Auch ein durch das Diagnoseverfahren erkannter Fehler des Öldrucksystems, also des KKD-Ventils, kann das Diagnoseverfahren für künftige Iterationen sperren.

Dabei kann auch eine (beliebige) Untermenge der genannten Fehlerquellen in Betracht gezogen werden.

Liegen die genannten Freigabebedingungen (oder eine Untermenge davon) vor, so wird in manchen Ausführungsbeispielen bestimmt, ob sich ein Öldruckmesspunkt innerhalb eines vorgegebenen Öldruckmesspunktebereichs befindet.

Die angegebenen Freigabebedingungen haben den Vorteil, dass eine reproduzierbare und hohe Trennschärfe des Diagnoseverfahrens zu einem planmäßigen Betrieb des KKD-Ventils erreichbar ist. Falsch-negative und falsch-positive Ergebnisse können so minimiert werden.

Der Öldruckmesspunkt kann durch eine Öldruckmessung bestimmt werden.

Beispielsweise kann die Verbrennungskraftmaschine in einer Hauptgalerie einen Öldrucksensor aufweisen, der dazu eingerichtet ist, einen Öldruck zu verschiedenen Zeitpunkten zu ermitteln. Ein Öldruckmesspunkt kann dann ein Tupel aus einem gemessenen Öldruck zu einer Messzeit darstellen.

In manchen Ausführungsbeispielen müssen diese beiden Koordinaten (gemessener Öldruck und Messzeit) des Öldruckmesspunktes eine vorbestimmte Anforderung erfüllen.

Die Anforderung an den gemessenen Öldruck kann umfassen, dass er einen Betrag hat, der oberhalb eines Betrags eines vorgegeben Öldruckschwellwertes liegt. Dafür kann der Öldruck während der Messzeit in regelmäßigen Abständen (bspw. zyklisch) mit einem Öldruck zu Beginn der Messzeit (im Nachfolgenden: Startöldruck) verglichen werden, sodass positive oder negative Differenzen des gemessenen Öldrucks im Vergleich zum Startöldruck erfasst werden können.

Wird das KKD-Ventil geöffnet, kann es zu einem Druckeinbruch kommen. Wird bspw. eine negative Differenz erwartet, sollte diese also unterhalb des vorgegebenen Öldruckschwellwerts liegen.

Wird das KKD-Ventil geschlossen, kann es zu einem Druckanstieg kommen. Wird bspw. eine positive Differenz erwartet, sollte diese also oberhalb der vorgegebenen Öldruckschwellwerts liegen.

Die Anforderung an die Messzeit kann umfassen, dass der Betrag des vorgegebenen Öldruckschwellwerts innerhalb eines vorgegebenen Zeitfensters überschritten wird.

In anderen Worten: Ein erwarteter Öldruckpeak (bspw. ein Maximum einer (symbolischen) Öldruckkurve) oder-dip (bspw. ein Minimum einer (symbolischen) Öldruckkurve) nach Öffnen oder Schließen des KKD-Ventils muss innerhalb des vorgegebenen Zeitfensters nach Öffnung bzw. Schließung liegen. Es wird also überprüft, ob sich der Öldruckpeak (oder -dip) mit der gewünschten Amplitude in dem zu erwartenden Zeitfenster einstellt.

Dabei kann das Zeitfenster in Abhängigkeit einer Motordrehzahl und/oder einer Öltemperatur variabel sein. Diese Abhängigkeit kann beispielsweise in Steuergerätedaten hinterlegt sein.

Der vorgegebene Öldruckmesspunktebereich definiert hierbei einen Mindestwert des zu erwartenden Öldrucks sowie das Zeitfenster, in welchem der erwartete Öldruckpeak- oder Dip liegt.

Analog zu dem Zeitfenster kann eine Fehlerschwelle für die zu erreichende Amplitude in Abhängigkeit von der Motordrehzahl und der Öltemperatur bestimmt werden.

Insofern befindet sich der Öldruckmesspunkt dann innerhalb des vorgegebenen Öldruckmesspunktebereichs, wenn ein Öldruck einen vorgegebenen Öldruckschwellwert übersteigt und ein Zeitpunkt, wann der Öldruck den vorgegebenen Öldruckschwellwert übersteigt, sich innerhalb eines vorgegebenen Zeitintervalls befindet.

In manchen Ausführungsbeispielen kann ein Öldrucksollwert vor Beginn des Diagnoseverfahrens angehoben werden, damit ein Öldruckdip vorteilhafterweise auf einem höheren Messniveau erfasst werden kann. Nach einer solchen Öldrucksollwertanhebung, kann eine vorgegebene Zeit abgewartet werden, damit der eingestellte (bzw. eingeregelte) Öldruck stationär werden kann, d.h. sich dem vorgegebenen stationären Öldrucksollwert angleicht.

Ist der Öldruck nahezu gleich dem Sollwert (d.h. ist eine Regelabweichung zwischen dem eingestellten Öldruck und dem Öldrucksollwert kleiner als ein vorgegebener Betrag), kann der Öldruck als stationär betrachtet werden. Unterschreitet die Regelabweichung diesen vorgegebenen Betrag, kann das KKD-Ventil erfindungsgemäß angesteuert werden. Der vorgegebene Betrag der Regelabweichung kann bspw. in einem Steuergerät als Steuergerätedaten hinterlegt sein, oder dergleichen.

In manchen Ausführungsbeispielen wird der Betriebsbereich durch wenigstens eine der Größen Motordrehzahl, Motormoment, und Öltemperatur repräsentiert.

In manchen Ausführungsbeispielen liegt dann ein stationäres Betreiben der Verbrennungskraftmaschine vor, wenn sich die Motordrehzahl innerhalb eines vorgegebenen Motordrehzahlbereichs ändert, sich das Motormoment innerhalb eines vorgegebenen Motormomentenbereichs ändert, und/oder sich ein Winkel einer Einlass-Nockenwelle und/oder einer Auslass-Nockenwelle jeweils innerhalb eines vorgegebenen Winkelbereichs ändert, wie bereits diskutiert.

In manchen Ausführungsbeispielen umfasst das Ansteuern ein Öffnen und/oder Schließen des KKD-Ventils.

Dadurch ergibt sich der Vorteil, dass eine aktive (intrusive) Diagnose durchgeführt wird, die zu einer erhöhten Diagnosegenauigkeit führen kann.

In manchen Ausführungsbeispielen können drei Diagnoseergebnisse unterschieden werden:
a) i.O. (in-Ordnung-) Fall: Der Druckpeak liegt innerhalb des erwarteten Zeitfensters UND erreicht die geforderte Amplitude.
b) n.i.O. (nicht-in-Ordnung-) Fall: Der Druckpeak ist zu niedrig.
c) nicht verwertbar: Der Druckpeak weist die geforderte Amplitude auf, diese liegt aber außerhalb des Zeitfensters.

Mittels c) kann eine mögliche überlagerte Öldruckstörung berücksichtigt werden.

Für c) kann mit einer vorgegebenen (konstanten) Zeit die Dauer eines Diagnoseevents definiert sein, d.h. es kann eine Zeitspanne vorgesehen sein, in welcher der Öldruck betrachtet wird. Diese Zeit kann länger sein, als das Zeitfenster der erwarteten Öldruckpeaks (oder -dips). In manchen Ausführungsbeispielen entspricht die Zeit für ein Diagnoseevent wenigstens der Zeit, bei der das erwartete Zeitfenster des Öldruckmesspunktebereichs schließt.

Wird innerhalb der Zeit des Diagnoseevents ein Betrag eines Öldruckpeaks gemessen, der nicht im erwarteten Zeitfenster liegt, aber dafür den geforderten Betrag des Öldruckschwellwerts übersteigt, so kann Fall c) vorliegen.

In anderen Worten: In manchen Ausführungsbeispielen wird das Diagnoseergebnis verworfen, wenn das Diagnoseverfahren ergibt, dass der Öldruckmesspunkt den Öldruckschwellwert zu einem Zeitpunkt übersteigt, der sich innerhalb eines Diagnoseevent-Zeitfensters und außerhalb des vorgegebenen Zeitintervalls befindet.

Der Öldruckmesspunkt kann sich durch die Suche nach einem lokalen Maximum (oder Minimum) ergeben, sodass sich ein Öldruckmesspunkt im Diagnoseevent-Zeitfenster befindet. Das heißt, in manchen Ausführungsbeispielen kann der Öldruckmesspunkt im Diagnoseevent-Zeitfenster liegen, aber außerhalb des erwarteten Zeitfensters, in dem das Diagnose-Ergebnis als gut oder schlecht beurteilt werden kann.

In anderen Worten: Das lokale Maximum oder Minimum kann innerhalb des erwarteten Zeitfensters liegen oder außerhalb. Liegt es zusätzlich noch außerhalb des Diagnoseevent-Zeitfensters, das mindestens das erwartete Zeitfenster umfasst, kann das Ergebnis verworfen werden.

Jedoch kann ein reguläres Einschalten des KKD-Ventils in manchen Ausführungsbeispielen nicht als Diagnoseevent genutzt werden, da bei einer regulären Einschaltung des KKD-Ventil (also zum Kühlen) eine Funktion (bspw. eine Kompensationsfunktion) vorgesehen sein kann, die einen Öldruckeinbruch (oder -peak oder -dip) kompensieren soll, was in Konkurrenz mit dem Vorliegen eines Peaks oder Dips als Diagnosekriterium steht.

Daher wird in manchen Ausführungsbeispielen eine solche Funktion für das Diagnoseverfahren deaktiviert.

Manche Ausführungsbeispiele betreffen eine Diagnosevorrichtung für ein Kolbenkühldüsenventil (KKD-Ventil) einer Verbrennungskraftmaschine eines Kraftfahrzeugs, welche dazu eingerichtet ist, ein Diagnoseverfahren nach einem der vorherigen Ansprüche auszuführen.

Die Diagnosevorrichtung kann als Steuergerät, zentraler Bordcomputer, CPU (Central Processing Unit) und dergleichen ausgebildet bzw. eingerichtet sein. Weiter kann die Diagnosevorrichtung über eine Schnittstelle auch extern an das Kraftfahrzeug anschließbar sein, bspw. indem sie als Computer, Smartphone, oder dergleichen ausgebildet ist. Zusätzlich hat das Kraftfahrzeug in solchen Ausführungsbeispielen ein Steuergerät, welches dazu eingerichtet ist, das KKD-Ventil anzusteuern, wenn es von der (externen) Diagnosevorrichtung eine entsprechende Anforderung erhält. Vorteilhafterweise kann ein erfindungsgemäßes Diagnoseverfahren dann auch auf einem Prüfstand ausgeführt werden.

In manchen Ausführungsbeispielen umfasst die Diagnosevorrichtung: eine Positivzählervorrichtung, die dazu eingerichtet ist, einen Positivzählwert zu inkrementieren, wenn das Diagnoseverfahren ergibt, dass sich der Öldruckmesspunkt innerhalb des vorgegebenen Öldruckmesspunktebereichs liegt; und eine Negativzählervorrichtung, die dazu eingerichtet ist, einen Negativzählwert zu inkrementieren, wenn das Diagnoseverfahren ergibt, dass sich der Öldruckmesspunkt außerhalb des vorgegebenen Öldruckmesspunktebereichs liegt.

Die jeweiligen Zähler können als elektrische Bauteile ausgebildet sein, welche beispielsweise eine Anzahl an Strom- oder Spannungsimpulsen zählen. Die Zähler können auch als reine Software in einem Diagnoseprogramm implementiert sein.

Dadurch ergibt sich der Vorteil, dass eine statistische Sicherheit gewährleistet werden kann, dass das Diagnoseergebnis korrekt ist (also dass kein falsch-negatives oder falsch-positives Ergebnis vorliegt). In anderen Worten führen einzelne falsch-negative Ergebnisse und/oder falsch-positive Ergebnisse nicht sofort zu einem gesamten falsch-positiven oder falschnegativen Ergebnis. Außerdem kann der Öldruck eine vorbestimmte Zeit lang zuverlässig überwacht werden. Des Weiteren kann der Öldruck vorteilhafterweise noch nach dem Zeitfenster der Diagnose überwacht werden. Ein weiterer Vorteil ist, dass ein Verwerfen eines Diagnoseergebnisses möglich ist.

Das Diagnoseverfahren kann in einer erfindungsgemäßen Diagnosevorrichtung iterativ ausgeführt werden, sodass eine ausreichende Anzahl an Messungen stattfinden kann, damit bspw. ein (einzelnes) falsch negatives oder falsch-positives Ergebnis nicht zwangsweise zu einer (falschen) Fehlermeldung in dem Kraftfahrzeug führt. Der Positivzähler und der Negativzähler können von einem gleichen oder von verschiedenen Zählertypen sein. Generell kann auch ein Zähler vorgesehen sein, der bei einem positiven Ergebnis positiv inkrementiert wird und bei einem negativen Ergebnis negativ inkrementiert wird.

Zudem kann eine Iteration durch ein Öffnen des KKD-Ventils und eine Iteration durch ein anschließendes Schließen des KKD-Ventils durchgeführt werden. Es können auch zwei Öffnungsvorgänge jeweils eine Iteration darstellen, ohne dass eine dazwischen liegende Schließung als Iteration gilt, weil diese beispielsweise durch eine geplante Kolbenkühlung hervorgerufen wird, und dergleichen.

Nach einer vorgegebenen Anzahl von Durchführungen des Diagnoseverfahrens kann dann entschieden werden, ob das KKD-Ventil ordnungsgemäß funktioniert, bspw. indem das Verhältnis von positiven Inkrementierungen zu negativen Inkrementierungen betrachtet wird.

In manchen Ausführungsbeispielen kann die Diagnose auch dann beendet werden, wenn einer der beiden Zähler einen vorgegebenen Schwellwert überschreitet.

Wird während einer Diagnose eine Freigabebedingung verletzt, kann nur die aktuelle Iteration beendet werden, während die Zähler nicht zurückgesetzt werden.

Der Negativzählwert wird, in manchen Ausführungsbeispielen, inkrementiert, wenn der Öldruck den Öldruckschwellwert nicht übersteigt und/oder wenn der Zeitpunkt außerhalb des vorgegebenen Zeitintervalls liegt.

Hierbei ist es für die Inkrementierung des Negativzählwerts ausreichend, wenn nur eine der hierin beschriebenen Bedingungen an den Öldruckmesspunkt nicht erreicht wird, bspw. ist es ausreichend, wenn der Öldruckpeak zwar zur richtigen Zeit gemessen wird, dieser jedoch zu schwach ist.

Um den beschriebenen Fall c) (nicht verwertbar) zu erfassen, kann in manchen Ausführungsbeispielen der Messwert verworfen werden, wenn Fall c) eintritt. Das heißt, dass der Negativzählwert nur dann inkrementiert wird, wenn der Öldruck den Öldruckschwellwert nicht übersteigt, während das Ergebnis verworfen wird, wenn der Öldruck den Öldruckschwellwert zwar übersteigt, aber außerhalb des vorgegebenen Zeitfensters.

Manche Ausführungsbeispiele betreffen ein Steuergerät für ein Kraftfahrzeug, welches eine erfindungsgemäße Diagnosevorrichtung umfasst.

Das Steuergerät kann ein eigenes Steuergerät sein, welches dazu eingerichtet ist, die Diagnosevorrichtung derart zu steuern, dass das erfindungsgemäße Diagnoseverfahren ausgeführt werden kann.

Generell kann auch ein bereits vorhandenes Steuergerät verwendet werden, welches von der Diagnosevorrichtung gesteuert werden kann, bspw. ein Steuergerät für eine dynamische Öldruckkontrolle, wobei die Diagnosevorrichtung dann bspw. innerhalb des zentralen Bordcomputers ausgebildet und eingerichtet sein kann.

Somit können vorteilhafterweise bereits bekannte Vorrichtungen verwendet werden, die bereits typischerweise in einem Kraftfahrzeug vorgesehen sind.

Insofern betreffen manche Ausführungsbeispiele ein Kraftfahrzeug mit einer erfindungsgemäßen Diagnosevorrichtung und/oder einem erfindungsgemäßen Steuergerät.

Das Kraftfahrzeug kann dabei jegliche Art von (bekanntem) Kraftfahrzeug sein, bspw. ein Personenkraftwagen, eine Zugmaschine, ein Landfahrzeug, Wasserfahrzeug, und dergleichen, wobei ein erfindungsgemäßes Kraftfahrzeug typischerweise eine Verbrennungskraftmaschine mit einer Ölgalerie aufweist, wie hierin beschrieben.

Ausführungsbeispiele der Erfindung werden nun beispielhaft und unter Bezugnahme auf die beigefügten Zeichnungen beschrieben, in der:
- Fig. 1: schematisch ein Ausführungsbeispiel eines Öldrucksystems gemäß der vorliegenden Erfindung darstellt;
- Fig. 2: ein erfindungsgemäßes Diagnoseverfahren in einem Blockdiagramm darstellt;
- Fig. 3: ein Diagramm zur Beurteilung des Öldruckmesspunkts zeigt;
- Fig. 4: ein erfindungsgemäßes Kraftfahrzeug mit einer erfindungsgemäßen Diagnosevorrichtung sowie einem erfindungsgemäßen Steuergerät in einem Blockdiagramm darstellt und
- Fig. 5: ein Ablaufdiagramm eines erfindungsgemäßen Diagnoseverfahrens zeigt.

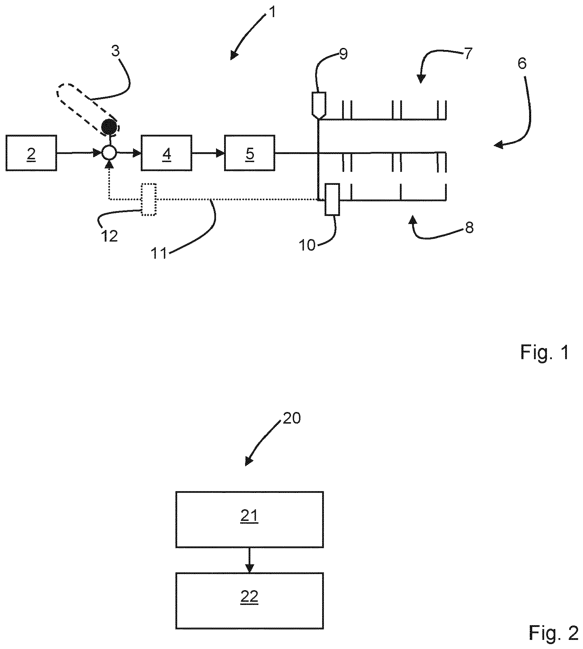

In Fig. 1 ist schematisch ein Ausführungsbeispiel eines Öldrucksystems 1 gemäß der vorliegenden Erfindung dargestellt.

Das Öldrucksystem 1 enthält eine Ölwanne 2 sowie eine variabel einstellbare Ölpumpe 3. Die variabel einstellbare Ölpumpe 3 pumpt mit einem voreingestellten Druck Öl aus der Ölwanne 2 in einen Ölfilter 4, wonach ein Ölkühler 5 angeordnet ist.

Das Öldrucksystem 1 enthält weiter eine Ölgalerie 6, die eine Hauptgalerie 7 und eine Nebengalerie 8 aufweist. In der Hauptgalerie 7 ist ein Öldrucksensor 9 angeordnet, der dazu eingerichtet ist, einen Öldruck in der Hauptgalerie zu bestimmen. In der Nebengalerie 8 ist ein KKD-Ventil 10 angeordnet, welches als elektronisches Regelventil ausgebildet ist, und wie es hierin beschrieben ist.

Bekannte Öldrucksysteme weisen zusätzlich eine Leitung 11 und ein Proportionalventil 12 auf, mit denen die Funktionalität des KKD-Ventils 10 überprüft werden kann. Da das KKD-Ventil allerdings mit einem Diagnoseverfahren gemäß der vorliegenden Erfindung angesteuert wird, woraufhin der Öldruckmesspunkt beurteilt wird, wie es hierin beschrieben ist, ist es gemäß der vorliegenden Erfindung vorteilhafterweise nicht notwendig, die Elemente 11 und 12 vorzusehen (weswegen sie gepunktet dargestellt sind).

Fig. 2 stellt ein Ausführungsbeispiel eines Diagnoseverfahrens 20 gemäß der vorliegenden Erfindung in einem Blockdiagramm dar.

In 21 wird das KKD-Ventil angesteuert, nachdem überprüft wurde, ob folgende Freigabebedingungen erfüllt sind:
a) Vorliegen eines stationären Betriebs der Verbrennungskraftmaschine, wie hierin beschrieben, wobei der stationäre Betrieb dann vorliegt, wenn ein jeweiliger Gradient der Größen Motordrehzahl, Motormoment, Winkel der Einlass-Nockenwelle und Winkel der Auslass-Nockenwelle unterhalb eines jeweiligen vorgegebenen Schwellwerts liegt.
b) Vorliegen eines vorbestimmten Betriebsbereichs, wie hierin beschrieben, wobei zur Beurteilung, ob ein vorbestimmter Betriebsbereich vorliegt, die Motordrehzahl in Abhängigkeit des Motormoments und der Öltemperatur in einem vorgegebenen Bereich betrachtet wird.
c) Vorliegen einer Öltemperatur in einem vorbestimmten Öltemperaturbereich, wie hierin beschrieben.
d) Ausschluss einer geplanten Ansteuerung des KKD-Ventils zur regulären Kolbenkühlung, wie hierin beschrieben.
e) Ausschluss eines Fehlers des Öldrucksystems, wie hierin beschrieben. Wenn der Öldrucksensor, das Ölpumpenregelventil, das Kolbenkühldüsenventil, der Öltemperatursensor oder andere Sensoren oder Aktoren im Öldrucksystem als defekt erkannt werden, wird das Diagnoseverfahren gesperrt.

Auch Fehler, die als Ersatzreaktion einen maximal möglichen Öldruck hervorrufen und oder die Öldruckregelung abschalten, sperren das Diagnoseverfahren.

Dabei kann auch eine (beliebige) Untermenge der genannten Fehlerquellen in Betracht gezogen werden.

In 22 wird bestimmt, ob sich ein Öldruckmesspunkt innerhalb eines vorgegebenen Öldruckmesspunktebereichs befindet, wie hierin beschrieben.

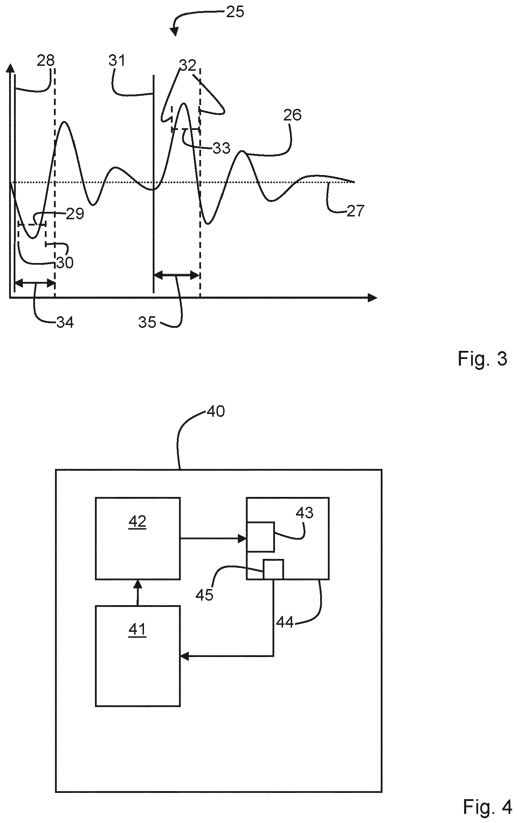

Fig. 3 zeigt ein Diagramm 25 zur Beurteilung, ob sich der Öldruckmesspunkt innerhalb des vorgegebenen Öldruckmesspunktebereichs befindet.

Auf dem Diagramm ist ein Öldruck (Ordinate) gegen eine Zeit (Abszisse) aufgetragen. Somit repräsentiert eine Kurve 26 eine Öldruckkurve, welche von einem Öldrucksensor in einer Hauptgalerie ermittelt wurde.

Die Linie 27 repräsentiert dabei einen Öldrucksollwert, der bei einem gewöhnlichen Betrieb der Verbrennungskraftmaschine vorliegt.

Bei einem Öffnen 28 eines KKD-Ventils wird ein Druckabfall in der Hauptgalerie erwartet. Dieser Druckabfall sollte erwartungsgemäß einen Öldruckschwellwert 29 in einem vorgegebenen Zeitfenster 30 unterschreiten, was in diesem Ausführungsbeispiel der Fall ist.

Bei einem Schließen 31 wird ein Druckanstieg in der Hauptgalerie erwartet, welcher innerhalb eines Zeitfensters 32 einen Öldruckschwellwert 33 übersteigen soll, was hier ebenfalls der Fall ist.

Des Weiteren sind zwei weitere Diagnoseevent-Zeitfenster 34 und 35 vorgesehen, in denen festgestellt wird, ob ein Diagnoseevent vorliegt, wie hierin beschrieben. Das Diagnoseevent-Zeitfenster 34 startet beim Öffnen 28 des KKD-Ventils und endet nach dem vorgegebenen Zeitfenster 30. Das Zeitfenster 35 startet beim Schließen 31 des KKD-Ventils und endet mit dem vorgegebenen Zeitfenster 32.

Fig. 4 stellt ein erfindungsgemäßes Kraftfahrzeug 40 in einem Blockdiagramm dar.

Das Kraftfahrzeug 40 weist eine erfindungsgemäße Diagnosevorrichtung 41 auf, welche in einem zentralen Bordcomputer (nicht abgebildet) implementiert ist. Die Diagnosevorrichtung enthält einen Positivzähler und einen Negativzähler (nicht abgebildet), wie hierin beschrieben. Die Diagnosevorrichtung ist dazu eingerichtet, ein Steuergerät 42 zu instruieren, ein KKD-Ventil 43 anzusteuern. Das KKD-Ventil 43 befindet sich in einer Nebengalerie eines Öldrucksystems 44. In einer Hauptgalerie des Öldrucksystems 44 befindet sich ein Öldrucksensor 45, welcher dazu eingerichtet ist, einen zeitlichen Druckverlauf, wie hierin beschrieben, zu ermitteln. Der zeitliche Druckverlauf wird an die Diagnosevorrichtung 41 übermittelt, welche ferner dazu eingerichtet ist, zu bestimmen, ob sich ein Öldruckmesspunkt innerhalb eines vorgegebenen Öldruckmesspunktebereichs befindet, wie hierin beschrieben.

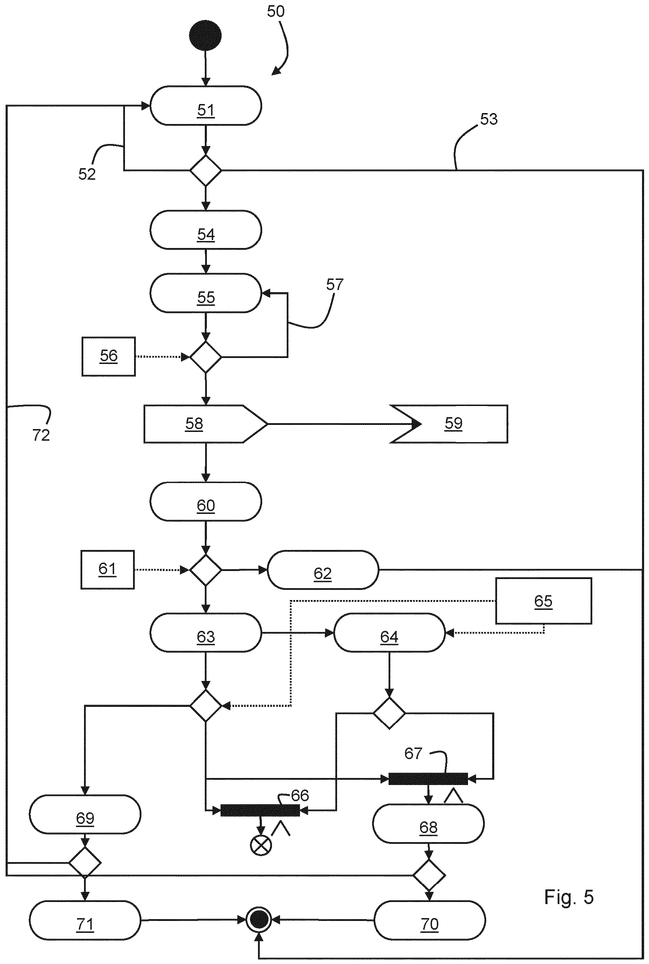

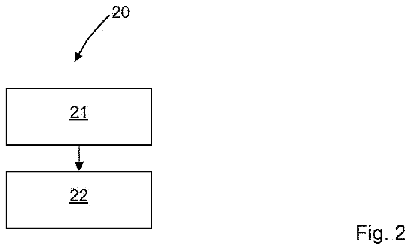

Fig. 5 zeigt ein Ablaufdiagramm eines erfindungsgemäßen Diagnoseverfahrens 50.

In 51 wird ermittelt, ob notwendige Freigabebedingungen erfüllt sind. Dieser Schritt wird in regelmäßigen Abständen ausgeführt, wie der Pfeil 52 andeutet, auch wenn das Diagnoseverfahren selbst weiter ausgeführt wird (mit 54). Dadurch kann das Diagnoseverfahren unterbrochen werden (53), wenn festgestellt wird, dass die Freigabebedingungen nicht mehr erfüllt sind.

In 54, wenn die Freigabebedingungen erfüllt sind, wird ein Öldrucksollwert zur Diagnose erhöht, der sich aus dem aktuellen Betriebsbereich ergibt. In 55 wird überprüft, ob eine unübliche Abweichung des Öldrucks zum Öldrucksollwerts vorliegt, indem er mit einem Schwellwert 56 verglichen wird. Wird eine unübliche Abweichung festgestellt, wird 55 so oft wiederholt (57), bis diese Abweichung nicht mehr vorliegt (weiter mit 58).

In 58 wird das KKD-Ventil angesteuert, wodurch es in 59 geöffnet (geschlossen) wird. In 60 wird entsprechend eine Uhr gestartet, durch welche die Messzeit (also das Diagnoseevent-Zeitfenster bestimmt wird. Wenn die Messzeit einen Schwellwert 61 überschreitet, wird die Uhr in 62 zurückgesetzt und das Diagnoseevent wird beendet. In 63 wird innerhalb der Messzeit nach einem Öldruckpeak (bzw. -dip) gesucht, wobei die Zeit, zu welcher der Peak gefunden wurde, in 64, gespeichert wird. Der gefundene Öldruckpeak sowie die Zeit, zu der er gefunden wurde, werden mit Betriebsbereich-bedingten Grenzen 65 verglichen (d.h. es wird überprüft, ob der Öldruckmesspunkt innerhalb des vorgegebenen Öldruckmesspunktebereichs liegt).

Hierzu sind zwei logische Verknüpfungen vorgesehen: eine UND-Verknüpfung 66, sowie eine UND-Verknüpfung 67.

In die UND-Verknüpfung 66 geht Folgendes ein: Ist der Betrag des Peaks größer als der Öldruckschwellwert UND liegt der Peak außerhalb des vorgegebenen Zeitfensters, wird das Ergebnis verworfen.

In die UND-Verknüpfung 67 geht Folgendes ein: Ist der Betrag des Peaks größer als der Öldruckschwellwert UND liegt der Peak innerhalb des vorgegebenen Zeitfensters, wir ein Positivzähler 68 inkrementiert.

Ist der Betrag des Peaks kleiner als der Öldruckschwellwert, wird ein Negativzähler 69 inkrementiert.

Sowohl für den Positivzähler 68 als auch für den Negativzähler 69 ist jeweils ein Grenzwert gesetzt, nachdem in ein Register 70 (für den Positivzähler 68) bzw. ein Register 71 (für den Negativzähler 69) eingetragen wird, dass entweder ein Fehler vorliegt oder dass das KKD-Ventil ordnungsgemäß funktioniert.

Das heißt, dass das Verfahren so oft iteriert wird (72), bis es häufig genug diagnostiziert wurde, dass das KKD-Ventil entweder ordnungsgemäß funktioniert oder nicht ordnungsgemäß funktioniert.

### Bezugszeichenliste

- 1: Öldrucksystem
- 2: Ölwanne
- 3: Variabel einstellbare Ölpumpe
- 4: Ölfilter
- 5: Ölkühler
- 6: Ölgalerie
- 7: Hauptgalerie
- 8: Nebengalerie
- 9: Öldrucksensor
- 10: KKD-Ventil
- 11: Leitung
- 12: Proportionalventil
- 20: Diagnoseverfahren
- 21: Ansteuern des KKD-Ventils
- 22: Bestimmen, ob sich ein Öldruckmesspunkt innerhalb des vorgegebenen Öldruckmesspunktebereichs befindet
- 25: Diagramm zur Beurteilung des Öldruckmesspunkts
- 26: Öldruckkurve
- 27: Öldrucksollwert
- 28: Öffnen des KKD-Ventils
- 29: Öldruckschwellwert
- 30: vorgegebenes Zeitfenster
- 31: Schließen des KKD-Ventils
- 32: vorgegebenes Zeitfenster
- 33: Öldruckschwellwert
- 34, 35: Diagnoseevent-Zeitfenster
- 40: Kraftfahrzeug
- 41: Diagnosevorrichtung
- 42: Steuergerät
- 43: KKD-Ventil
- 44: Öldrucksystem
- 45: Öldrucksensor
- 50: Diagnoseverfahren
- 51: Ermittlung, ob Freigabebedingungen erfüllt sind
- 52: Kontinuierliche Überprüfung der Freigabebedingungen
- 53: Unterbrechung des Diagnoseverfahrens
- 54: Erhöhung des Sollöldrucks
- 55: Überprüfen, ob unübliche Regelabweichung vorliegt (Vergleich des Öldrucks mit Öldrucksollwert)
- 56: Schwellwert der Amplitude (des Öldruckpeaks bzw. -dips)
- 57: Wiederholung von 55 bis Abweichung nicht mehr vorliegt
- 58: Ansteuern des KKD-Ventils
- 59: Öffnung/Schließung des KKD-Ventils
- 60: Starten einer Uhr für die Messzeit
- 61: Schwellwert der Messzeit
- 62: Zurücksetzen der Uhr für die Messzeit
- 63: Suchen nach Öldruckpeak (oder -dip)
- 64: Speicher der Zeit
- 65: Betriebsbereiche-bedingte Grenzen
- 66, 67: UND-Verknüpfung
- 68: Positivzähler
- 69: Negativzähler
- 70, 71: Register
- 72: Iteration des Diagnoseverfahrens

## Patentansprüche

1. Diagnoseverfahren für ein Kolbenkühldüsenventil (KKD-Ventil) eines Öldrucksystems einer Verbrennungskraftmaschine eines Kraftfahrzeugs, umfassend:
Ansteuern (21; 58) des KKD-Ventils (10; 43) zum Erfassen von Öldruckdiagnosedaten,
wenn mehrere Freigabebedingungen erfüllt sind, wobei die mehreren Freigabebedingungen enthalten:
- Vorliegen eines stationären Betriebs der Verbrennungskraftmaschine;
- Vorliegen eines vorbestimmten Betriebsbereichs;
- Vorliegen einer Öltemperatur in einem vorbestimmten Öltemperaturbereich;
- Ausschluss einer geplanten Ansteuerung des KKD-Ventils zur regulären Kolbenkühlung; und
- Ausschluss eines Fehlers des Öldrucksystems;
das Diagnoseverfahren weiter umfassend:
Bestimmen (22), ob sich ein Öldruckmesspunkt innerhalb eines vorgegebenen Öldruckmesspunktebereichs befindet.

2. Diagnoseverfahren nach Anspruch 1, wobei sich der Öldruckmesspunkt dann innerhalb des vorgegebenen Öldruckmesspunktebereichs befindet, wenn ein Öldruck einen vorgegebenen Öldruckschwellwert übersteigt und ein Zeitpunkt, wann der Öldruck den vorgegebenen Öldruckschwellwert übersteigt, sich innerhalb eines vorgegebenen Zeitintervalls befindet.

3. Diagnoseverfahren nach einem der vorherigen Ansprüche, wobei der Betriebsbereich durch wenigstens eine der Größen Motordrehzahl, Motormoment, und Öltemperatur repräsentiert wird.

4. Diagnoseverfahren nach einem der vorherigen Ansprüche, wobei dann ein stationäres Betreiben der Verbrennungskraftmaschine vorliegt, wenn sich die Motordrehzahl innerhalb eines vorgegebenen Motordrehzahlbereichs ändert, sich das Motormoment innerhalb eines vorgegebenen Motormomentenbereichs ändert, und/oder sich ein Winkel einer Einlass-Nockenwelle und/oder einer Auslass-Nockenwelle jeweils innerhalb eines vorgegebenen Winkelbereichs ändert.

5. Diagnoseverfahren nach einem der vorherigen Ansprüche, wobei das Ansteuern ein Öffnen und/oder Schließen des KKD-Ventils (10; 43) umfasst.

6. Diagnosevorrichtung für ein Kolbenkühldüsenventil (KKD-Ventil) einer Verbrennungskraftmaschine eines Kraftfahrzeugs, welche dazu eingerichtet ist, ein Diagnoseverfahren (20; 50) nach einem der vorherigen Ansprüche auszuführen.

7. Diagnosevorrichtung nach Anspruch 6, umfassend:
eine Positivzählervorrichtung (73), die dazu eingerichtet ist, einen Positivzählwert zu inkrementieren, wenn das Diagnoseverfahren (20; 50) ergibt, dass sich der Öldruckmesspunkt innerhalb des vorgegebenen Öldruckmesspunktebereichs liegt; und
eine Negativzählervorrichtung (74), die dazu eingerichtet ist, einen Negativzählwert zu inkrementieren, wenn das Diagnoseverfahren (20; 50) ergibt, dass sich der Öldruckmesspunkt außerhalb des vorgegebenen Öldruckmesspunktebereichs liegt, wobei der Negativzählwert inkrementiert wird, wenn der Öldruck den Öldruckschwellwert nicht übersteigt und/oder wenn der Zeitpunkt außerhalb des vorgegebenen Zeitintervalls liegt.

8. Diagnosevorrichtung nach einem der Ansprüche 6 oder 7, wobei ein Diagnoseergebnis verworfen wird, wenn das Diagnoseverfahren ergibt, dass der Öldruckmesspunkt den Öldruckschwellwert zu einem Zeitpunkt übersteigt, der sich innerhalb eines Diagnoseevent-Zeitfensters und außerhalb des vorgegebenen Zeitintervalls befindet.

9. Steuergerät für ein Kraftfahrzeug, welches eine Diagnosevorrichtung (41) nach einem der Ansprüche 6 bis 8 umfasst.

10. Kraftfahrzeug mit einer Diagnosevorrichtung (41) nach einem der Ansprüche 6 bis 8 und/oder einem Steuergerät (42) nach Anspruch 9.
